# EUROPEAN PATENT APPLICATION

(11) **EP 0 709 119 A1**
(43) Date of publication of application: **01.05.1996**
(21) Application number: 95307529.8
(22) Date of filing: 24.10.1995
(51) Int. Cl.: B01D 3/22

(54) **Liquid-vapour contact device**

(30) Priority: 27.10.1994 US 330289
(71) Applicant: THE BOC GROUP, INC., Murray Hill, New Jersey 07974 (US)
(72) Inventor: Potthoff, Richard W., Scotch Plains, New Jersey 07076 (US); Burton, Alan C., Scotch Plains, New Jersey 07076 (US)
(74) Representative: Wickham, Michael

(57) **Abstract**

A liquid-vapour contact device 10 has a plate-like body 12 provided with a central segment 18 formed of expanded metal construction. The expanded metal construction provides slit-like openings 20 for the vapour to ascend through the plate-like body 12 and mix with liquid traversing the plate-like body 12. Tongue-like flow deflectors 22 associated with the openings 20 impart momentum to the vapour in a flow direction from inlet segment 14 to outlet segment 16 of the plate-like body. A plurality of elongate members 24 overlie the central segment 18 of the plate-like body 12. The plurality of the elongated members 24 define channels each running from the inlet segment 14 to the outlet segment 16 which are preferably outwardly curved to ensure complete liquid distribution across the plate-like body 12. In addition, flow impedance members 32 in the form of cut and bent tabs impede the flow of liquid across the plate-like body 12 while impelling liquid against side surfaces of the elongated members to produce a falling film and therefore a secondary mechanism for liquid-vapour contact.

## Description

The present invention relates to a liquid-vapour contact device for contacting liquid and vapour phases of a mixture in, for example, a distillation column.

It is known to rectify mixtures of two or more components in distillation columns having liquid-vapour contact devices to contact ascending vapour and descending liquid phases of the multi-component mixture. Through such contact, the descending liquid phase typically becomes ever more concentrated in the heavier components of the mixture to be separated while the ascending vapour phase typically becomes every more concentrated in the lighter components of the mixture.

Well known liquid-vapour contact devices include bubble cap plates and sieve trays. In both types of devices the vapour phase ascends through openings provided in the trays or plates to contact liquid of the liquid phase traversing the trays or plates. The liquid phase is supplied to and is discharged from inlet and outlet sections of the plates or trays by downcomers provided in the column. In such manner, the vapour bubbles up through the liquid and mixes with the liquid to effect a change in the composition of the liquid and the vapour. Thereafter, the liquid is discharged from a particular plate or tray and the vapour ascends from the liquid to the next succeeding plate or tray.

A liquid-vapour contact device having an improved performance has been proposed in US 5,091,119. This liquid-vapour contact device has a tray typically formed of expanded metal. The tray is provided with slit like openings and tongue-like elements associated with the openings to propel ascending vapour in a direction taken from an inlet to an outlet section of the tray. In order to increase the residence time of the liquid, an overlying expanded metal grid work is provided to inhibit the flow of the liquid from the inlet to the outlet.

As will be discussed, the present invention provides an improved liquid-vapour contact device having an enhanced area of liquid-vapour contact.

According to the present invention a liquid-vapour contact device comprising:
a plate-like body having an inlet segment for receiving said liquid, an opposed outlet segment for discharging said liquid, and a central segment connecting said inlet and outlet segments and on which, in use, said liquid flows across said plate-like body from said inlet segment to said outlet segment;
said central segment having openings for said vapour to ascend through said tray like body;
a plurality of flow deflectors associated with said openings for imparting momentum to said vapour and therefore said liquid in a flow direction taken from said inlet segment to said outlet segment: and
a plurality of elongate members overlying said central segment and having upstanding side;
said plurality of elongate members defining channels running from said inlet segment to said outlet segment and having flow impedance members projecting from said side surfaces thereof so as, in use, to retard the flow of said liquid and to direct said liquid to said side surfaces, thereby to form a descending film of said liquid on said side surfaces for mixing with said vapour.

As is evident, ascending vapour imparts a momentum to the liquid from the inlet to the outlet. However, the flow of the liquid is retarded through the flow deflectors to increase liquid-vapour contact. At the same time, the impedance members deflect the liquid to the side surfaces of the elongate member to provide a falling-film mechanism for liquid-vapour contact. Thus, increased performance of a plate-like liquid-vapour contact device is produced by the subject invention by providing more interfacial area for contact of the liquid and vapour.

A liquid-vapour device according to the invention will now be described by way of example with reference to the accompanying drawings, in which:
Figure 1 is a top plan view of a liquid-vapour contact device in accordance with the present invention with portions broken away to show a central segment of the device formed from expanded metal:
Figure 2 is fragmentary, top plan view of a central segment of Figure 1;
Figure 3 is an elevational, cross-sectional view of a part of the device taken along lines 3-3 of Figure 1; and
Figure 4 is a fragmentary perspective view of Figure 1 of a part of the device shown in Figure 1.

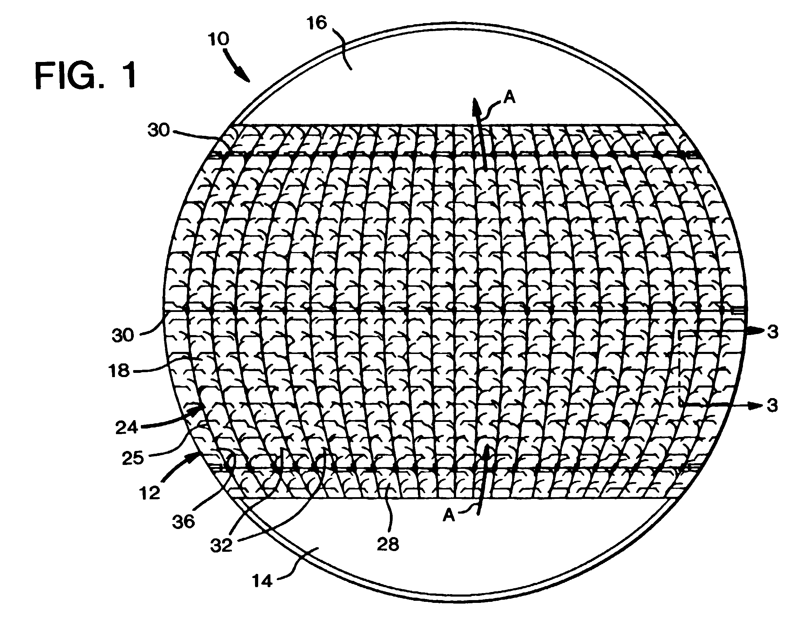

With reference to Figure 1 a liquid-vapour contact device 10 is formed by a plate-like body 12 having an inlet segment 14 for receiving liquid and an opposed outlet segment 16 for discharging the liquid. A central segment 18 connects the inlet and outlet segments 14 and 16. The liquid flows across central segment 18 of plate-like body 12 in a direction indicated by arrowheads A from inlet segment 14 to outlet segment 16.

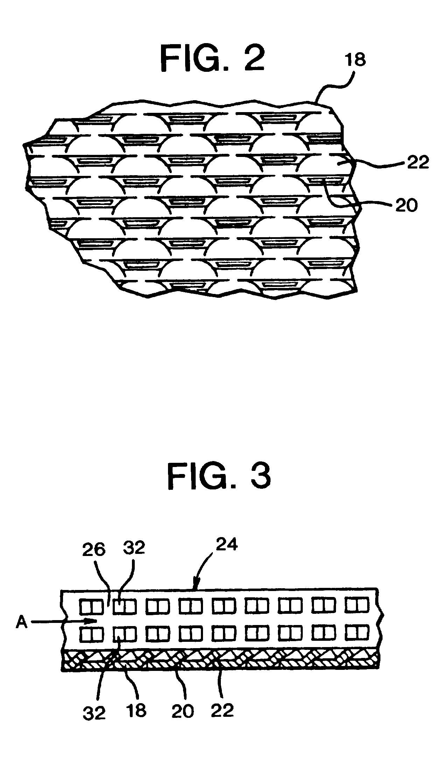

With additional reference to Figure 2, vapour ascends through openings defined in central section 18 of plate-like body 12 that are produced by an expanded metal sheet formation having slits 20 to form the openings and a plurality of flow deflectors 22 associated with slits 20 for imparting momentum to the vapour and therefore the liquid in the flow direction indicated by arrowheads A. The flow deflectors have a tongue-like configuration.

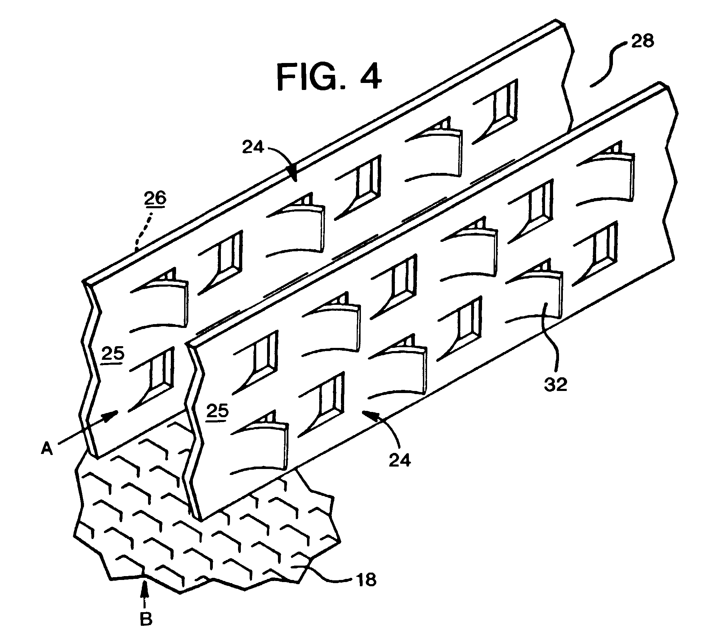

With reference to Figures 3 and 4, a plurality of elongate members 24 overlie central segment 18 and have side surfaces 25 and 26 which are oriented in a normal direction with respect to plate-like body 18. The side surfaces need not however be at right angles with respect to the plane of the plate-like body 12. Side surfaces 25 and 26 could have a convexity, a concavity, or be oriented at an angle with respect to the plate of plate-like body 18. For instance, although the elongate members 24, are rectangular sheets, shown in the drawings as they could be of trapezoidal cross-section to impart the angle to side surfaces 25 and 26.

The elongate members 24 form channels 28 running from inlet to outlet segments 14 and 16 and preferably are outwardly curved to ensure a wide and complete distribution of liquid on central section 18 of plate-like body 12. The elongate members 24 are held in their outwardly curved or bowed shape and in position by tie rods 30. As can be appreciated, although not preferred, elongate members 24 could run directly from inlet segment 14 to outlet segment 16 without any curvature.

A plurality of flow impedance members 32, preferably integrally formed with the elongate members 24 are provided. Preferably flow impedance members 32 are rectangular tabs cut out of the elongate members 24 and bent to project from side surfaces 25 and 26. Preferably, flow impedance members 32 are arranged in two rows with the flow impedance members 32 bent in alternate. opposite directions in each row.

As previously stated, vapour ascending through central section 18 of plate-like body 12 (in the direction of arrowhead B) imparts momentum to liquid in direction of arrowhead A. This momentum may be so great that without restraint of the flow there would be insufficient residence time on the central section for adequate liquid-vapour mixing to take place. Flow impedance members 32 retard the motion of the liquid to ensure that there is adequate liquid-vapour mixing. In addition the members 32 impel or project liquid against the side surfaces 25 and 26 so that a descending liquid film is produced on these surfaces to increase liquid-vapour contact.

In a typical embodiment of the subject invention, the elongate members 24 are set apart anywhere from between about 0.64 centimetres to about 10.16 centimetres. Each of the elongate members 24 has a height within a range of about 3.81 centimetres to about 0.54 centimetres below the next plate-like member 12, located directly above. Preferably, the elongate members 24 have about the same height as the liquid-gas dispersion.

## Claims

1. A liquid-vapour contact device comprising:
a plate-like body having an inlet segment for receiving said liquid, an opposed outlet segment for discharging said liquid, and a central segment connecting said inlet and outlet segments and on which, in use, said liquid flows across said plate-like body from said inlet segment to said outlet segment;
said central segment having openings for said vapour to ascend through said tray like body;
a plurality of flow deflectors associated with said openings for imparting momentum to said vapour and therefore said liquid in a flow direction taken from said inlet segment to said outlet segment: and
a plurality of elongate members overlying said central segment and having upstanding side;
said plurality of elongate members defining channels running from said inlet segment to said outlet segment and having flow impedance members projecting from said side surfaces thereof, in use, so as to retard the flow of said liquid and to direct said liquid to said side surfaces, thereby to form a descending film of said liquid on said side surfaces for mixing with said vapour.

2. A liquid-vapour contact device as claimed in claim 1, wherein said plate-like body, openings and said plurality of flow deflectors comprise an expanded metal sheet formation having slits forming said openings and tongues associated with said slits forming said flow deflectors.

3. A liquid-vapour contact device as claimed in claim 1 or claim 2, wherein said elongate members comprise a plurality of rectangular sheets extending from said inlet to said outlet segments and having an outwardly curved configuration to distribute said liquid throughout said central segment of said sheet.

4. A liquid-vapour contact device as claimed in claim 1 or claim 2, wherein said flow impedance members comprise a plurality of rectangular tabs cut out of said rectangular sheets and bent to project from said side surfaces thereof.

5. A liquid-vapour contact device as claimed in claim 4, wherein said rectangular tabs on each of said sheets are arranged in two rows extending in a lengthwise direction thereof and alternately bent in opposite directions.
